# FASCICULE DE BREVET EUROPEEN

(11) **EP 0 453 385 B1**
(45) Date de publication et mention de la délivrance du brevet: **07.12.1994**
(21) Numéro de dépôt: 91460025.9
(22) Date de dépôt: 18.04.1991
(51) Int. Cl.: F24F 6/18, B64D 13/08

(54) **Générateur de vapeur**
Dampferzeuger
Steam-generator

(30) Priorité: 18.04.1990 FR 9005100
(43) Date de publication de la demande: 23.10.1991
(73) Titulaire: INDUSTRIELLE DU PONANT SA, 29220 Landerneau (FR)
(72) Inventeur: Alix, Guy-Paul, F-29200 Brest (FR); Kohler, Marc, F-29200 Brest (FR); Tranvoez, Jean-Michel, F-95570 Bouffemont (FR); Manchec, Jean-Marc, Simi Valley, CA 93065 (FR)
(74) Mandataire: Le Guen, Louis François

(56) Documents cités:
- EP-A- 0 345 190
- US-A- 4 139 762
- US-A- 4 262 191
- logoff

## Description

L'invention concerne une générateur de vapeur qui est utilisé dans un humidificateur pour un système de conditionnement d'air et, plus particulièrement, pour un système de conditionnement d'air d'aéronefs.

Des humidificateurs pour des systèmes de conditionnement d'air d'aéronefs sont connus et on pourra se reporter, à titre d'exemple, à au brevet EP-A-0 345 190.

Dans cette demande, il est décrit un humidificateur pour système de conditionnement d'air qui comprend une gaine de circulation d'air chaud à humidifier, un générateur de vapeur d'eau dont la sortie est située au sommet d'un cône divergent s'étendant jusqu'à la paroi interne de la gaine, la surface latérale du cône étant pourvue de trous pour laisser passer l'air chaud et pour le mélanger, de manière homogène, à la vapeur d'eau engendrée par le générateur de vapeur.

On connaît les avantages procurés par l'utilisation d'un générateur de vapeur dans un humidificateur et on citera, parmi ceux-ci, le fait de pouvoir utiliser de l'eau contenant des éléments minéraux et, en particulier, l'eau du circuit avion. Citons également le fait qu'il fonctionne sans qu'apparaîsse de la condensation dans la gaine conduisant l'air à la cabine de l'avion.

Le document US-A-4 139 762 décrit un générateur de vapeur comprenant: un récipient muni d'un orifice de sortie de la vapeur engendrée à l'intérieur dudit récipient et d'un orifice de remplissage en eau raccordé à une vanne d'alimentation; une résistance électrique plongeant complètement dans l'eau contenue dans ledit récipient, un détecteur de niveau d'eau, un hygrostat et une unité de commande. Lorsque le niveau d'humidité tombe en dessous du niveau désiré, l'hygrostat commande l'excitation d'une bobine ce qui a pour effet la connexion sur le réseau de l'élément chauffant afin qu'il produise de la vapeur.

Un but de l'invention est de prévoir un générateur de vapeur utilisable dans un tel humidificateur et dont la quantité de vapeur en sortie soit parfaitement régulable, en particulier, en fonction du besoin d'humidité dans l'avion.

A cet effet, l'invention propose un générateur de vapeur pour un humidificateur d'un système de conditionnement d'air raccordé, par une conduite, à un cône de dilution placé à l'intérieur d'une gaine de circulation d'air de l'humidificateur, ledit générateur comprenant un récipient muni d'un orifice de sortie de la vapeur engendrée à l'intérieur dudit récipient, l'orifice étant relié à la conduite, d'un orifice de remplissage en eau raccordé à la sortie d'une vanne d'alimentation dont l'entrée est reliée à une source d'alimentation en eau, et, à l'intérieur dudit récipient, une résistance électrique plongeant complètement dans l'eau contenue dans ledit récipient ainsi qu'un détecteur de niveau d'eau, ledit générateur comprenant en outre une unité de régulation prévue pour recevoir les signaux d'un hygromètre; l'unité de régulation étant agencée pour commander l'ouverture de la vanne d'alimentation, en réponse aux signaux délivrés par le détecteur de niveau, afin de maintenir le niveau de l'eau entre un niveau seuil inférieur et un niveau seuil supérieur, et pour asservir l'intensité du courant qui traverse la résistance sur la valeur des signaux délivrés par l'hygromètre proportionnellement à la différence entre un taux de consigne et le taux d'humidité mesuré par l'hygromètre.

Ainsi, au moyen du détecteur de niveau, le volume d'eau dans le récipient est sensiblement constant. En conséquence, la quantité de vapeur engendrée par le générateur est directement proportionnelle à l'intensité du courant électrique dans la résistance électrique de chauffage. Ainsi, en régulant l'intensité du courant en fonction des signaux délivrés par un hygromètre placé dans le cockpit de l'avion, on régule la quantité de vapeur générée par le générateur sur le taux d'humidité dans le cockpit.

Selon une autre caractéristique de l'invention, le récipient est monté de manière amovible sur un support qui porte, de plus, l'unité de régulation et la vanne d'alimentation, l'unité de régulation commandant également, d'une part, la vanne d'alimentation pour remplir le récipient lorsque celui-ci vient d'être installé sur le support ou vient d'être mis en marche.

Ainsi, un générateur de vapeur selon l'invention n'est pas confronté au problème de l'entartrage qui, à terme, pourrait obturer les canalisations et conduites de l'humidificateur, puisqu'après un laps de temps prédéterminé, le récipient équipé de sa résistance et de son détecteur de niveau est remplacé par un nouveau.

Selon une autre caractéristique de l'invention, le détecteur de niveau est constitué, à l'intérieur du récipient, de deux électrodes verticales qui sont alimentées, par l'unité de régulation, à tension constante, l'unité de régulation mesurant le courant qui traverse lesdites électrodes pour en déduire le niveau d'eau dans le récipient et le récipient est, en outre, muni d'un orifice de vidange raccordé à l'entrée d'une vanne de vidange à commande électrique, l'entrée de commande de ladite vanne étant reliée à l'unité de régulation, pour effectuer, à des moments déterminés par l'unité de régulation elle-même, l'évacuation d'une certaine quantité d'eau contenue dans le récipient, cette opération étant immédiatement suivie d'une commande d'ouverture de la vanne d'alimentation jusqu'au moment où le niveau d'eau dans le récipient dépasse le niveau de seuil supérieur.

Lorsque l'eau s'évapore, non seulement le niveau dans le récipient baisse, mais la concentration en éléments minéraux augmente. La conductibilité de l'eau est modifiée et les électrodes fournissent un courant dont l'intensité pour un niveau d'eau donné, le niveau de l'eau régulé a diminué. En évacuant une certaine quantité de cette eau et en remplissant avec de l'eau en plus faible concentration minérale, on fait diminuer cette concentration jusqu'à une valeur qui remédie à cet inconvénient et qui permet alors un bon fonctionnement de détecteur de niveau.

Selon une autre caractéristique de l'invention, le support porte la vanne de vidange et l'unité de régulation commande son ouverture pour vider le récipient au moment de son changement.

Selon une autre caractéristique de l'invention, la résistance électrique est constituée d'un fil métallique résistant enroulé en boudin sur un tronc de cône dont l'axe est sensiblement parallèle à l'axe longitudinal du récipient et dont la petite base est tournée vers le fond du récipient.

Cette forme particulière de la résistance fait que le calcaire qui se dépose sur la résistance a tendance à se décrocher et à tomber au fond du récipient. Cet effet peut être amplifié si l'eau, entre les spires de la résistance, bout. La résistance ne s'entartrant pas, elle présente un transfert de chaleur sensiblement constant dans le temps.

Selon une autre caractéristique de l'invention, le générateur de vapeur est pourvu d'un support mobile en translation suivant l'axe principal du récipient et supportant une partie tubulaire reliée au tube de l'humidificateur et qui vient se raccorder, de manière amovible, sur l'orifice de sortie de vapeur du récipient, et de plots de connexions qui reçoivent des plots de connexion du récipient auxquels sont branchées les électrodes du récipient.

Ainsi, en s'écartant du récipient, le support déconnecte les plots du récipient et débranche l'orifice du récipient, celui-ci pouvant alors être retiré.

Selon une autre caractéristique de l'invention, le récipient est pourvu d'une électrode raccordée à l'unité de régulation, et qui est connectée, à l'intérieur du récipient à une première borne d'un fusible dont l'autre borne est raccordée à une des bornes de la résistance, l'unité de régulation vérifiant, au moment de l'installation d'un nouveau récipient, si le fusible est conducteur ou pas, l'unité de régulation, dans le premier cas, envoyant dans le fusible un courant suffisamment intense pour le faire fondre et, dans le second cas, interdisant la mise en marche du générateur.

Il est ainsi impossible de monter un récipient qui a déjà été utilisé.

Selon une autre caractéristique de l'invention, l'unité de régulation reçoit les signaux d'une sonde de température et d'une sonde d'humidité montées dans la gaine de circulation d'air de l'humidificateur et, lorsque ceux-ci dépassent des valeurs prédéterminées, elle commande la coupure du courant d'électrodes et l'ouverture de la vanne de vidange.

Selon une autre caractéristique de l'invention, l'unité de régulation reçoit les signaux d'une sonde de température placée à proximité du récipient et, lorsque ces signaux dépassent une valeur prédéterminée, elle commande la coupure du courant d'électrodes et l'ouverture de la vanne de vidange.

Ces moyens constituent des moyens de sécurité qui arrêtent le générateur lorsqu'un mauvais fonctionnement est détecté.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 montre le schéma de principe d'un humidificateur d'air utilisant un générateur de vapeur selon l'invention,
la Fig. 2 montre une vue en coupe d'un générateur de vapeur selon l'invention, ledit générateur étant prêt à fonctionner, et
la Fig. 3 est une vue en coupe d'un générateur de vapeur selon l'invention, le récipient du générateur étant montré incliné et prêt à être retiré.

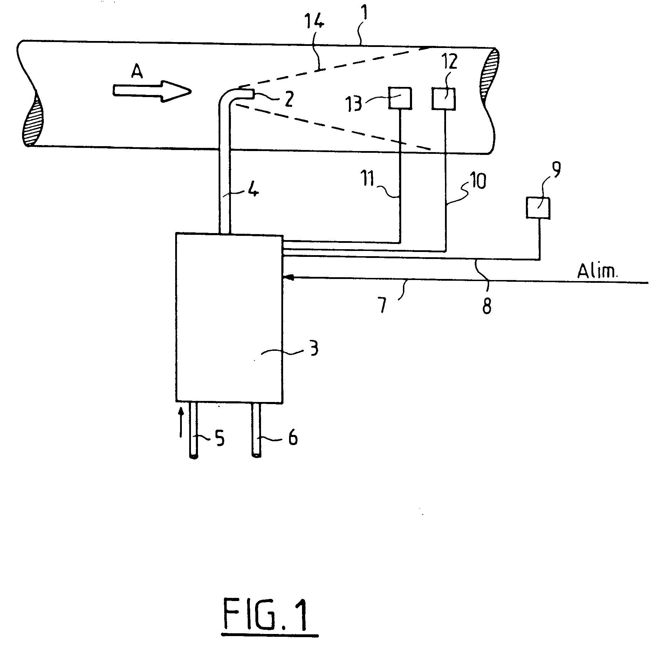

La Fig. 1 montre une gaine de circulation d'air 1 d'un avion, cet air préalablement réchauffé étant à humidifier. Dans la gaine cylindrique 1, est installée, dans l'axe de la gaine, la bouche de sortie 2 d'un générateur de vapeur 3, les moyens de fixation de la bouche 2 n'étant pas montrés. La bouche de sortie 2 est reliée au générateur de vapeur 3 par un tuyau 4 qui passe à travers la paroi de la gaine 1.

Le générateur de vapeur 3 reçoit par une canalisation 5 de l'eau de la source (non représentée) de l'avion, alors que, par la canalisation 6, il est relié à un trop plein (non représenté). Il est relié, par une ligne multifilaire 7, à une alimentation électrique (non représentée). Il est également relié, par un fil 8, à un détecteur d'humidité 9 monté, par exemple, dans le cockpit de l'avion, par des fils 10, 11, respectivement à un détecteur de température 12 et à un détecteur d'humidité 13.

Autour de la bouche de sortie 2, est montée la petite base d'un cône 14 de même axe que l'axe longitudinal de la gaine 1 et dont la grande base est rendue solidaire de la surface interne de la gaine 1, en aval de la bouche 2. La paroi latérale du cône 14 est percée de trous par lesquels passe l'air chaud qui entre ainsi dans le cône 14 (flèche A), le régime d'écoulement de l'air en aval du cône 14 étant turbulent afin d'assurer un mélange homogène de l'air et de la vapeur d'eau émise par la bouche 2.

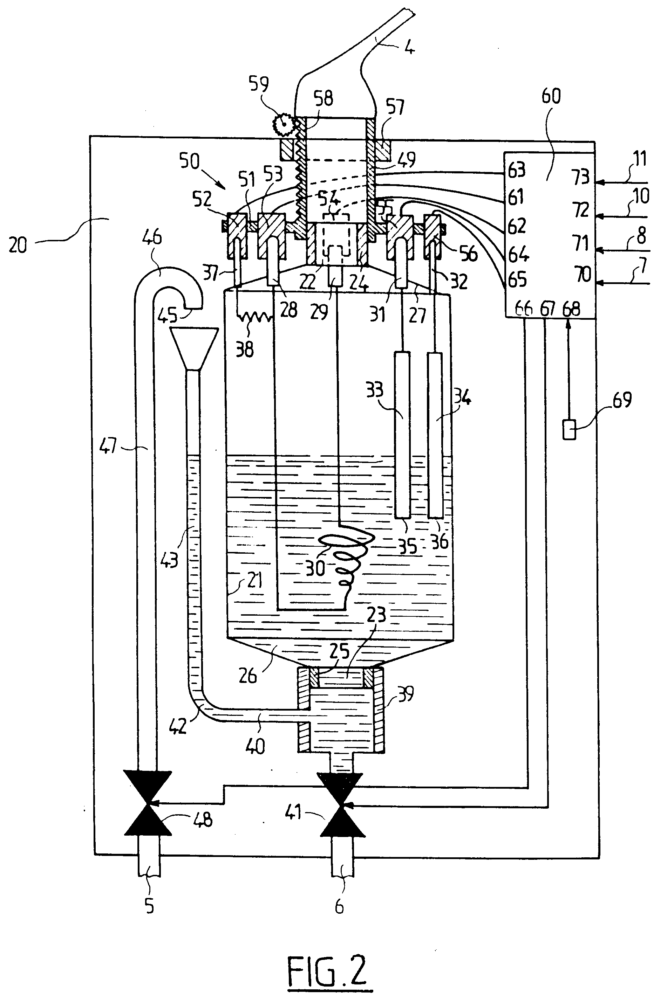

Le générateur de vapeur 3 représenté en détail à la Fig. 2 comprend un support 20 sur lequel est monté un récipient 21 de forme essentiellement cylindrique dont les deux bases sont tronconiques.

Aux extrémités haute et basse du récipient 21, celui-ci comporte respectivement des orifices 22, 23 limités par des tubes axiaux 24, 25. Les tubes supérieur et inférieur 24, 25 sont respectivement en saillie sur le fond 26 et la paroi 27 vers l'extérieur du récipient 21. Sur sa paroi supérieure 27, le récipient 21 est pourvu de deux plots 28, 29 auxquels sont respectivement connectées, à l'intérieur du récipient 21, une première borne et une seconde borne d'une résistance électrique 30 située dans le partie basse du récipient 21. Celle-ci est constituée d'un fil électrique métallique résistant enroulé en boudin selon un axe parallèle à l'axe longitudinal du récipient 21. Avantageusement, pour des raisons déjà exposées ci-dessous, le fil résistant est enroulé sur la surface externe d'un tronc de cône ayant sa petite base tournée vers le fond 26 du récipient. On a représenté, par des traits tirets fins, l'eau contenue dans le récipient 21. On constate que la résistance 30 baigne complètement dans cette eau. Des troisième et quatrième plots 31, 32 également prévus sur la paroi supérieure 27 sont respectivement connectés à une première et seconde électrodes métalliques 33 et 34 parallèles à l'axe longitudinal du récipient 21 et dont les bords inférieurs 35, 36 sont toujours en dessous du niveau de seuil supérieur de l'eau contenue dans le récipient. Les électrodes 35, 36 ont leurs surfaces qui sont en regard l'une de l'autre. Un cinquième plot 37 est prévu sur la paroi supérieure 27 du récipient 21 et est branché, à l'intérieur de celui-ci, à une première borne d'un fusible 38 dont l'autre borne est connectée à un des plots 28, 29 connectés à la résistance 30.

Le tube inférieur 25 est emmanché à une première extrémité d'un tube 39 qui reçoit latéralement une conduite 40, l'autre extrémité du tube 39 étant reliée à l'entrée d'une vanne de vidange 41 à commande électrique. La sortie de la vanne 41 est reliée à la canalisation 6 déjà représentée à la Fig. 1. Elle est montée solidaire du support 20. La conduite 40 présente un coude 42 et une partie linéaire 43 sensiblement parallèle à l'axe longitudinale du récipient 21. Au bout de la partie linéaire 43, est prévu un évasement 44 en regard du bout 45 d'une seconde conduite comprenant un coude 46 et une partie de raccordement 47 à la sortie d'une vanne de remplissage 48 à commande électrique. La vanne 48 a son entrée reliée à la canalisation 5 déjà représentée à la Fig. 1. Le bout libre 45 de la seconde conduite 46, 47 est avantageusement pourvu d'un petit orifice si bien que l'eau qui s'en échappe tombe goutte-à-goutte dans l'évasement 43 de la première conduite 40. Cette arrangement est prévu pour isoler électriquement l'eau contenue dans le récipient 21 de la masse électrique de la vanne 48.

Le tube supérieur 24 du récipient 21 est emmanché sur une partie tubulaire 49 d'un support 50. Celui-ci est constitué d'une plaque 51 solidaire de la partie tubulaire 49 et sur laquelle sont prévus cinq plots femelles 52 à 56 qui viennent respectivement s'adapter sur le plot 37, sur les deux plots mâles 28, 29 connectés aux bornes de la résistance 30 et sur les deux plots mâles 31, 32 connectés aux électrodes 33, 34. La partie tubulaire 49 est prévue pour coulisser axialement dans une douille 57 solidaire du support 20. Sur une de ses génératrices, la partie tubulaire 49 est pourvue d'une crémaillère 58 s'engrenant avec une roue dentée 59 dont l'axe est monté à rotation sur le support 20. La partie tubulaire 49 reçoit, dans sa partie supérieure, le tuyau 4 déjà représenté à la Fig. 1 et qui relie le générateur de vapeur 3 à l'humidificateur.

Sur le support 20, est également montée une unité de régulation 60 comportant deux sorties 61, 62 respectivement reliées aux deux plots femelles 53, 54 (eux-mêmes branchés aux bornes de la résistance 30), une entrée/sortie 63 reliée au plot 52, deux sorties 64, 65 à laquelle sont reliés les troisième et quatrième plots 55, 56, deux sorties 66, 67 respectivement reliées aux entrées de commande des vannes 48, 41, une entrée 68 reliée à une sonde de température 69 montée sur le support 20, une entrée multifilaire 70 recevant, par la ligne multifilaire 7 déjà représentée à la Fig. 1, les tensions d'alimentation nécessaires au bon fonctionnement du générateur, et trois entrées 71, 72, 73 respectivement reliées aux fils 8, 10, 11 déjà représentées à la Fig. 1. Rappelons que ces fils 8, 10, 11 sont respectivement reliés à un hygromètre 9 monté avantageusement dans le cockpit de l'avion, une sonde de température 12 et une sonde d'humidité 13 montées toutes les deux dans la gaine 1.

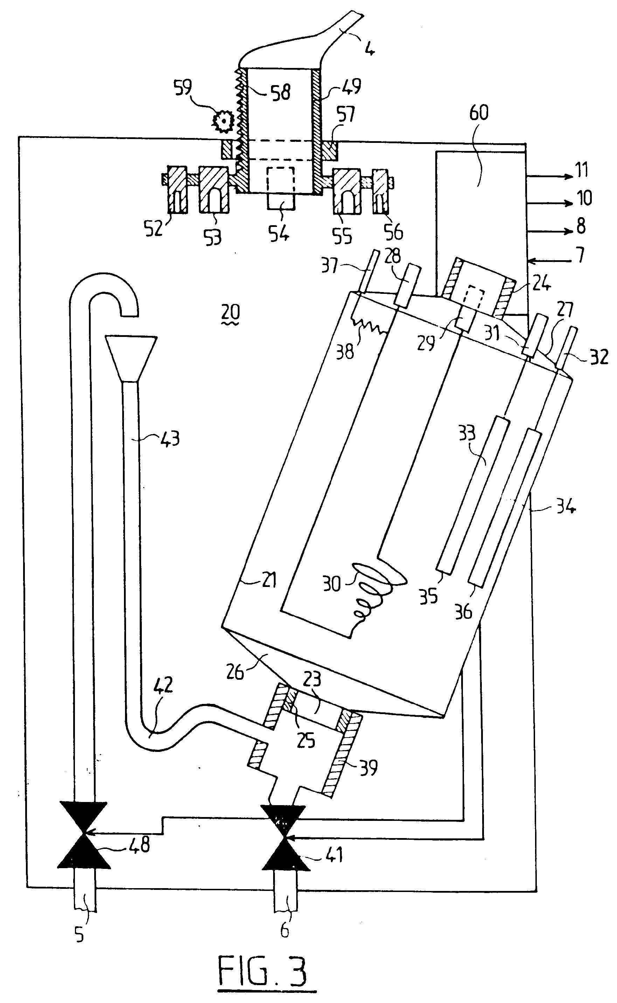

Lorsqu'on fait tourner la roue dentée 59, celle-ci entraîne vers le haut, au moyen de la crémaillère 58, le support 50. Les plots femelles 52 à 56 se désolidarisent des plots mâles 28, 29, 31, 32, 37 du récipient 21 et sa partie tubulaire 49 se dégage du tube supérieur 24 du récipient 21. Comme le montre la Fig. 3, la partie tubulaire 39 peut pivoter d'un certain angle autour d'un axe perpendiculaire au plan du support 20 et entraîner, dans ce mouvement, le récipient 21. Celui-ci peut alors être extrait si l'on désolidarise son tube inférieur 25 de la partie tubulaire 39.

On notera que, sur la Fig. 3, les connexions des plots 52 à 56 à l'unité de régulation 60 ne sont pas représentées pour ne pas alourdir le dessin.

L'unité de régulation 60 est avantageusement pilotée par un microprocesseur, si bien que le fonctionnement du générateur de vapeur de l'invention est lié aux programmes de commande de celui-ci.

Ainsi, l'unité de régulation 60 reçoit les signaux des deux sondes de température 12, 69, d'une sonde d'humidité 13 et d'un hygromètre 9 et commande, en fonction des signaux reçus et de leurs traitements par le microprocesseur, l'intensité dans la résistance électrique 30 et les vannes 41, 48.

Le principe de fonctionnement est le suivant: le courant qui traverse la résistance électrique 30 est commandé et régulé par l'unité de régulation 60. Elle baigne complètement dans l'eau contenue dans le récipient 21 et transmet la quantité de chaleur qu'elle génère par effet Joule à cette eau. Lorsque le chauffage est suffisant, la quantité d'eau qui s'évapore est directement proportionnelle à la quantité de chaleur transmise et donc à l'intensité du courant qui circule dans la résistance. La vapeur d'eau générée est extraite du récipient par la conduite 4 et rejoint la petite base du cône 14 dans la gaine 1 pour se mélanger à l'air qui y circule et l'humidifier.

L'unité de régulation 60 reçoit, sur son entrée 71, les signaux engendrés par l'hygromètre 9 et, par rapport à une consigne donnée, en déduit les besoins en humidité dans le cockpit de l'avion. Si le taux d'humidité dans le cockpit est inférieur au taux de consigne, l'unité de régulation 60 commande, par ses sorties 61, 62, une augmentation de l'intensité du courant qui traverse la résistance 30, cette augmentation étant proportionnelle à la différence de ces taux. De même, si le taux dans le cockpit est supérieur au taux de consigne, elle commande une diminution de l'intensité du courant qui traverse la résistance 30 proportionnelle à la différence des valeurs de ces taux. L'homme de métier aura compris que l'intensité du courant dans le résistance 30 est asservie sur la valeur des signaux délivrés par l'hygromètre 9.

En s'évaporant, le niveau de l'eau dans le récipient 21 s'abaisse. L'unité de régulation 60 crée une différence de potentiel entre les électrodes 33, 34 qui plongent dans l'eau du récipient 21 et mesure l'intensité du courant qui les traverse. Celle-ci est proportionnelle à la surface des électodes en regard l'une de l'autre dans l'eau. Si le niveau de l'eau dans le récipient 21 s'abaisse, l'intensité du courant diminue proportionnellement. L'unité de régulation 60 mesure l'intensité de ce courant et le maintient dans une fourchette de courant centrée sur une valeur d'intensité de courant donnée. Si elle s'abaisse en dessous de la valeur inférieure de cette fourchette, l'unité 60 commande l'ouverture de la vanne 48, ce qui a pour résultat d'augmenter le niveau de l'eau dans le récipient 21. L'intensité du courant dans les électrodes 33, 34 croît jusqu'à dépasser la valeur supérieure de la fourchette. A ce moment, l'unité 60 commande la fermeture de la vanne 48. Les électrodes 33, 34 jouent le rôle d'un détecteur de niveau et l'unité 60 maintient, par la commande de la vanne 48, le niveau d'eau sensiblement constant, à l'hystérésis près introduit par le fonctionnement même de la régulation de courant. En pratique, les électrodes 33, 34 permettent de garder le niveau de l'eau entre un niveau de seuil inférieur et un niveau de seuil supérieur, le seuil inférieur étant toujours au dessus de la résistance 30.

Par ailleurs, quand l'eau s'évapore, la concentration en éléments minéraux de l'eau dans le récipient augmente. Sa conductibilité augmente, ce qui a pour résultat, à terme, de modifier le comportement du détecteur de niveau que constituent les électrodes 33, 34. Pour remédier à cet inconvénient, l'unité de régulation 60, à des moments prédéterminés ou au contraire déterminés par l'unité 60 elle-même, commande l'ouverture de la vanne 41 pour évacuer une certaine quantité d'eau du récipient, quantité prédéterminée ou au contraire déterminée par l'unité 60. Une fois la vanne 41 fermée, elle commande l'ouverture de la vanne 48 pour l'introduction d'eau dans le récipient 21 jusqu'à ce que le courant dans les électrodes 33, 34 atteigne sa valeur maximale et le niveau d'eau atteigne son seuil supérieur.

Les capteurs de température, l'un 69 à proximité du récipient 21, l'autre 12 dans le gaine 1, peuvent avoir, selon un fonctionnement simplifié de l'invention (fonctionnement lié aux programmes du microprocesseur de l'unité de régulation 60), un rôle de sécurité. Si la température est trop élevée ou si elle varie trop brusquement, le courant dans la résistance est interrompu.

L'ouverture de la vanne 41 est commandée, par l'unité 60, au moment où l'on ôte le récipient 21 du générateur pour le vidanger.

Au moment d'installer un nouveau récipient, l'unité de régulation 60 vérifie l'état conducteur du fusible en injectant, par exemple, par le plot 37, un courant. Si le fusible est conducteur, l'unité de régulation envoie, dans le fusible, un courant suffisamment intense pour le faire fondre puis elle initialise une horloge et, au bout d'une durée qui est définie comme la durée de vie du récipient, déclenche une alarme (non représentée) placée, par exemple, dans le cockpit de l'avion. Par contre, s'il n'est pas conducteur, cela signifie que l'on a installé un récipient qui a déjà été utilisé et l'unité de régulation le signale, par exemple, par une alarme installée dans le cockpit.

## Revendications

1. Générateur de vapeur pour un humidificateur d'un système de conditionnement d'air raccordé, par une conduite (4), à un cône de dilution placé à l'intérieur d'une gaine de circulation d'air de l'humidificateur, ledit générateur comprenant un récipient (21) muni d'un orifice (22) de sortie de la vapeur engendrée à l'intérieur dudit récipient (21), l'orifice (22) étant relié à la conduite (4), d'un orifice (23) de remplissage en eau raccordé à la sortie d'une vanne d'alimentation (48) dont l'entrée est reliée à une source d'alimentation en eau, et, à l'intérieur dudit récipient (21), une résistance électrique (30) plongeant complètement dans l'eau contenue dans ledit récipient (21) ainsi qu'un détecteur de niveau d'eau (33, 34), ledit générateur comprenant en outre une unité de régulation (9) prévue pour recevoir les signaux d'un hygromètre (9); l'unité de régulation étant agencée pour commander l'ouverture de la vanne d'alimentation (48), en réponse aux signaux délivrés par le détecteur de niveau (33, 34), afin de maintenir le niveau de l'eau entre un niveau seuil inférieur et un niveau seuil supérieur, et pour asservir l'intensité du courant qui traverse la résistance (30) sur la valeur des signaux délivrés par l'hygromètre (9) proportionnellement à la différence entre un taux de consigne et le taux d'humidité mesuré par l'hygromètre (9).

2. Générateur de vapeur selon la revendication 1, caractérisé en ce que le récipient (21) est monté de manière amovible sur un support (20), ladite unité de régulation (60), montée sur ledit support (20), commandant la vanne (48) d'alimentation en eau dudit récipient (21), également montée sur ledit support (20), de manière à remplir ledit récipient (21) lorsque celui-ci vient d'être installé vide sur le support (20) ou vient d'être mis en place.

3. Générateur de vapeur selon la revendication 1 ou 2, caractérisé en ce que le récipient (21) est muni d'un orifice de vidange (24) raccordé à l'entrée d'une vanne de vidange (41) à commande électrique, l'entrée de commande de ladite vanne (41) étant reliée à l'unité de régulation (60) pour effectuer, à des moments déterminés par l'unité de régulation (60), l'évacuation d'une certaine quantité d'eau contenue dans le récipient (21), cette opération étant immédiatement suivie d'une commande d'ouverture de la vanne d'alimentation (48) jusqu'au moment où le niveau d'eau dans le récipient (21) dépasse le niveau seuil supérieur.

4. Générateur de vapeur selon la revendication 3, caractérisé en ce que l'unité de régulation (60) commande l'ouverture de la vanne (41) pour vider le récipient (21) au moment où l'on effectue son changement.

5. Générateur selon une des revendications précédentes, caractérisé en ce que la résistance électrique (30) est constituée d'un fil métallique résistant enroulé en boudin sur un tronc de cône dont l'axe est sensiblement vertical et parallèle à l'axe longitudinal du récipient et la petite base est tournée vers le fond du récipient.

6. Générateur selon une des revendications précédentes, caractérisé en ce qu'il est pourvu d'un support (50) qui est mobile en translation suivant l'axe principal du récipient (21) et qui supporte une partie tubulaire (49) reliée, d'une part, à la conduite (4) de l'humidificateur et, d'autre part, venant se raccorder, de manière amovible, sur l'orifice (22) de sortie de vapeur du récipient (21), et de plots de connexion (53 et 54) qui reçoivent des plots de connexion (28 et 29) du récipient auxquels sont branchées les bornes de la résistance électrique (30).

7. Générateur de vapeur selon une des revendications précédentes, caractérisé en ce que le récipient (21) est pourvu d'un plot (37) raccordé à l'unité de régulation (60 et qui est connecté, à l'intérieur du récipient (21) à une première borne d'un fusible (38) dont l'autre borne est raccordée à une des bornes de la résistance (30), l'unité de régulation (60) vérifiant, au moment de l'installation d'un nouveau récipient (21) si le fusible (38) est conducteur ou pas de l'électricité, et, dans le premier cas, envoyant dans celui-ci un courant suffisamment intense pour le faire fondre et, dans le second cas, interdisant la mise sous tension de la résistance (30).

8. Générateur selon une des revendications précédentes, caractérisé en ce que l'unité de régulation (60) reçoit les signaux respectivement issus d'une sonde de température (12) et d'une sonde d'humidité (13) montées dans la gaine de circulation d'air (1) de l'humidificateur et, lorsque les valeurs de ces signaux dépassent des valeurs prédéterminées, elle commande la coupure de l'alimentation de la résistance (30).

9. Générateur de vapeur selon une des revendications précédentes, caractérisé en ce que l'unité de régulation (60) reçoit le signal d'une sonde de température (69) placée à proximité du récipient (21) et, lorsque la valeur de ce signal dépassent une valeur prédéterminée, elle commande la coupure de l'alimentation de la résistance (30).

## Patentansprüche

1. Dampferzeuger für eine Luftbefeuchtungseinrichtung einer Luftklimatisierungsanlage, welche über eine Leitung (4) mit einem Verdünnungskegel verbunden ist, welcher im Inneren eines Luftzirkulationskanals der Befeuchtungseinrichtung angeordnet ist, wobei der Dampferzeuger einen Behälter (21) aufweist, welcher mit einer Auslaßöffnung (22) für den Dampf versehen ist, welcher im Inneren des Behälters (21) erzeugt wird, wobei die Öffnung (22) mit der Leitung (4) verbunden ist, welcher ferner eine Füllöffnung (23) für Wasser aufweist, welche mit dem Austritt eines Zufuhrventils (28) verbunden ist, dessen Eingang mit einer Wasserversorgungsquelle verbunden ist, und wobei im Inneren des Behälters (21) ein elektrischer Widerstand (30) vollständig in das im Behälter (21) enthaltene Wasser eingetaucht ist, sowie einen Wasserstandsdetektor (33, 34) aufweist, wobei der Erzeuger ferner eine Steuereinheit (9) aufweist, welche derart vorgesehen ist, daß sie die Signale eines Hygrometers (9) erhält, die Steuereinheit derart betreibbar ist, daß das Öffnen des Zufuhrventils (48) in Abhängigkeit von Signalen gesteuert wird, die von dem Pegelstandsdetektor (33, 34) geliefert werden, um den Wasserpegelstand zwischen einem unteren Pegelstandsschwellwert und einem oberen Pegelstandsschwellwert zu halten, und um die durch den Widerstand (30) gehende Stromstärke auf den Wert der Signale zu steuern, die von dem Hygrometer (9) geliefert werden, und zwar proportional zur Differenz zwischen einem Sollwert und einem mit Hilfe des Hygrometers (9) gemessenen Feuchtigkeitswert.

2. Dampferzeuger nach Anspruch 1, **dadurch** **gekennzeichnet**, daß der Behälter (21) unbeweglich auf einem Träger (20) angebracht ist, die Steuereinheit (60), die auf dem Träger (20) angebracht ist, das Zufuhrventil (48) für das Wasser im Behälter (21) steuert, und ebenfalls an dem Träger (20) derart angebracht ist, daß der Behälter (21) gefüllt wird, wenn dieser im leeren Zustand auf dem Träger (20) installiert wird oder in Betrieb genommen wird.

3. Dampferzeuger nach Anspruch 1 oder 2, **dadurch** **gekennzeichnet**, daß der Behälter (21) mit einer Auslaßöffnung (24) versehen ist, welche mit einem Eingang eines elektrisch gesteuerten Auslaßventils verbunden ist, der Steuereingang des Ventils (41) mit der Steuereinheit (60) verbunden ist, um zu bewirken, daß zu durch die Steuereinheit (60) vorbestimmten Zeitpunkten eine gewisse, in dem Behälter (21) enthaltene Wassermenge abgezogen wird, und daß dieser Betrieb unmittelbar auf eine Steuerung zum Öffnen des Zufuhrventils (48) auf den Zeitpunkt folgt, zu dem der Wasserstandspegel im Behälter (21) den oberen Pegelstandsschwellwert überschreitet.

4. Dampferzeuger nach Anspruch 3, **dadurch** **gekennzeichnet,** daß die Steuereinheit (60) die Öffnung des Ventils (41) steuert, um den Behälter (21) zu dem Zeitpunkt zu entleeren, zu dem eine Umschaltung erfolgt.

5. Dampferzeuger nach einem der vorangehenden Ansprüche, **dadurch** **gekennzeichnet,** daß der elektrische Widerstand (30) von einem Metallwiderstandsdraht gebildet wird, welcher wendelförmig auf einen Kegelstumpf gewickelt ist, dessen Achse im wesentlichen vertikal und parallel zur Längsachse des Behälters ist, und daß die kleine Basis in Richtung zum Boden des Behälters abgebogen ist.

6. Dampferzeuger nach einem der vorangehenden Ansprüche, **dadurch** **gekennzeichnet**, daß er mit einem Träger (50) versehen ist, welcher entlang der Hauptachse des Behälters (1) translatorisch beweglich ist, und welcher einen rohrförmigen Abschnitt (49) trägt, welcher einerseits mit der Leitung (4) der Befeuchtungseinrichtung verbunden ist, und andererseits auf unbewegliche Weise mit der Austrittsöffnung (22) für den Dampf des Behälters (21) verbindbar ist, sowie mit Verbindungskontakten (53 und 54) verbindbar ist, welche Verbindungskontakte (28 und 29) des Behälters aufnehmen, und von denen die Anschlußklemmen des elektrischen Widerstands (30) abzweigen.

7. Dampferzeuger nach einem der vorangehenden Ansprüche, **dadurch** **gekennzeichnet**, daß der Behälter (21) mit einem Verbindungskontakt (37) versehen ist, welcher mit der Steuereinheit (60) verbunden ist, und der im Inneren des Behälters (21) mit einer ersten Anschlußklemme einer Sicherung (38) verbunden ist, deren andere Anschlußklemme mit einer der Anschlußklemmen des Widerstands (30) verbunden ist, daß die Steuereinheit (60) zum Zeitpunkt der Installation eines neuen Behälters (21) feststellt, wenn die Sicherung (38) leitend oder stromlos ist, und die im erstgenannten Falle eine so ausreichende Stromstärke bereitstellt, daß dieser zum Schmelzen gebracht wird, und im zweitgenannten Falle die Unterspannungsetzung des Widerstands (30) unterbindet.

8. Dampferzeuger nach einem der vorangehenden Ansprüche, **dadurch** **gekennzeichnet**, daß die Steuereinheit (60) die Signale jeweils von einer Temperatursonde (12) und einer Feuchtigkeitssonde (13) erhält, welche in dem Luftkanal (1) der Befeuchtungseinrichtung angeordnet sind, und daß dann, wenn die Werte dieser Signale die vorbestimmten Werte überschreiten, diese Einheit die Versorgung des Widerstands (30) abschaltet.

9. Dampferzeuger nach einem der vorangehenden Ansprüche, **dadurch** **gekennzeichnet**, daß die Steuereinheit (60) das signal einer Temperatursonde (69) erhält, welche in der Nähe des Behälters (21) angeordnet ist, und daß dann, wenn der Wert dieses Signales einen vorbestimmten Wert überschreitet, diese Einheit die Unterbrechung der Versorgung des Widerstandes (30) steuert.

## Claims

1. Steam generator for a humidifier of an air-conditioning system, connected by a pipe (4), to a dilution cone placed inside an air circulation casing of the humidifier, the said generator comprising a container (21) provided with an outlet orifice (22) for the steam developed inside the said container (21), the orifice (22) being connected to the pipe (4), by a water filling orifice (23) connected to the outlet of a feed valve (48) the inlet of which is connected to a water feed source and, inside the said container (21) an electric resistance (30) plunging completely into the water contained in the said container (21) as well as a water level detector (33, 34), the said generator comprising in addition a regulating unit (9) provided to receive the signals of a hygrometer (9); the regulating unit being arranged to command the opening of the feed valve (48) in respense to the signals given by the level detector (33, 34) so as to keep the level of the water between a lower threshold level and an upper threshold level and to subject the intensity of the current which passes through the resistance (30) to the value of the signals given by the hygrometer (9) proportionally to the difference between a rate of order and the rate of humidity measured by the hygrometer (9).

2. Steam generator according to claim 1, characterised in that the container (21) is mounted removably on a support (20), the said regulating unit (60), mounted on the said support (20), commanding the water feed valve (48) of the said container (21) likewise mounted on the said support (20) so as to fill the said container (21) when the latter has just been installed empty on the support (20) or has just been put in place.

3. Steam generator according to claim 1 or 2, characterised in that the container (21) is provided with an emptying orifice (24) connected to the inlet of an emptying valve (41) with electric control, the central inlet of the said valve (41) being connected to the regulating unit (60) in order to effect at moments determined by the regulating unit (60), the evacuation of a certain quantity of water contained in the container (21), this operation being followed immediately by an opening command of the feed valve (48) up to the moment when the water level in the container (21) exceeds the upper threshold level.

4. Steam generator according to claim 3, characterised in that the regulating unit (60) commands the opening of the valve (41) in order to empty the container (21) at the moment when its change is effected.

5. Steam generator according to one of the preceding claims, characterised in that the electric resistance (30) is constituted by a resistant metal wire wound spirally on a cone frustum the axis of which is substantially vertical and parallel to the longitudinal axis of the container and the small base is turned towards the bottom of the container.

6. Steam generator according to one of the preceding claims, characterised in that it is provided with a support (50) which is movable in translation along the main axis of the container (21) and which supports a tubular part (49), connected, on the one hand, to the pipe (4) of the humidifier and, on the other hand, detachably connected on the steam outlet orifice (22) of the container (21) and connection studs (53 and 54) which receive connection studs (28 and 29) of the container to which are pluged in the terminals of the electric resistance (30).

7. Steam generator according to one of the preceding claims, characterised in that the container (21) is provided with a stud (37) connected to the regulating unit (60) and which is connected inside the container (21) to a first terminal of a fuse (38) the other terminal of which is connected to one of the terminals of the resistance (30), the regulating unit (60) verifying, at the moment of installation of a new container (21) whether the fuse (38) is conducting or not electricity and, in the first case, sending into this latter a current sufficiently intense to cause it to blow out and in the second case, preventing the placing under voltage of the resistance (30).

8. Generator according to one of the preceding claims, characterised in that the regulating unit (60) receives the signals respectively given by a temperature probe (12) and by a humidity probe (13) mounted in the air circulation casing (1) of the humidifier and when the values of these signals exceed predetermined values it commands the cutting off of the feed of the resistance (30).

9. Steam generator according to one of the preceding claims, characterised in that the regulating unit (60) receives the signal from a temperature probe (69) placed close to the container (21) and when the value of this signal exceeds a predetermined value, it commands the cutting off of the feed of the resistance (30).
